# EUROPEAN PATENT APPLICATION

(11) **EP 4 818 285 A1**
(43) Date of publication of application: **07.10.2026**
(21) Application number: 25167381.0
(22) Date of filing: 31.03.2025
(51) Int. Cl.: C09K 5/06

(54) **PHASE CHANGE MATERIAL COMPOSITION WITH ENHANCED THERMAL CONDUCTIVITY**

(71) Applicant: Cowa Thermal Solutions AG, 6039 Root D4 Luzern (CH)
(72) Inventor: Waser, Remo, 8038 Zürich (CH); O'Neill, Poppy Jayne Patricia Hurst, 6010 Kriens (CH); Roos, Philipp, 6003 Luzern (CH); Ruckli, Yolanda, 6333 Hünenberg See (CH); Maranda, Simon Aaron, 6005 Luzern (CH)
(74) Representative: P&TS SA (AG, Ltd.)

(57) **Abstract**

The invention concerns an enhanced phase change material (PCM) composition having improved thermal conductive properties, comprising a PCM component, thermo-conductive filler particles, and expanded graphite.

The invention also concerns a method for preparing an enhanced salt-hydrate PCM composition and a heat storage device or a heat transfer device comprising this composition.

## Description

### Technical domain

The present invention relates to phase change materials, specifically to a salt-hydrate phase change material composition with improved thermal conductivity. The invention also relates to a method for preparing such a phase change material compositions and to heat storage of heat transfer devices comprising said composition.

### Related art

Phase Change Materials (PCMs) are substances that store and release thermal energy by undergoing phase transitions, typically from solid to liquid and vice versa. This process involves the absorption or release of a substantial amount of latent heat, defined by their enthalpy of fusion.

PCM's can generally be categorised into three main groups: organic, inorganic, and eutectic. Organic PCMs, like paraffins and fatty acids, are chemically stable, non-corrosive, and safe, though they can be expensive. Inorganic PCMs, such as salt hydrates and metallic alloys, offer higher thermal storage density but may suffer from supercooling and phase separation. Eutectic PCMs are blends of organic and inorganic compounds, or a blend different salts that melt and solidify at precise temperatures, balancing the benefits of both types.

Salt-hydrate PCMs, also referred to as inorganic PCMs, are especially appealing due to their combination of high volumetric latent heat storage capacity, low toxicity, and well-defined melting point. They are also widely available and cost-effective.

PCMs are highly effective for temperature regulation, as they can absorb or release large amounts of heat while maintaining a stable temperature during phase changes. Their unique properties make them valuable across various industries. By enhancing temperature stability and energy efficiency, PCMs contribute to sustainable and cost-effective thermal regulation in diverse applications. To meet the specific thermal requirements of an application, PCMs should possess a transition temperature that falls within the application's operational range and exhibit high thermal conductivity to ensure efficient heat transfer.

Examples of common applications for PCMs include building insulation, electronics cooling, healthcare, medical and food preservation as well as their use in thermal batteries.

Unlike conventional chemical batteries, thermal batteries leverage the latent heat of PCMs to provide a cost-effective and sustainable energy storage solution. However, for efficient operation, maintaining high thermal conductivity is essential. Without good thermal conductivity, heat transfer within the PCM becomes slow and uneven, leading to inefficient charging and discharging cycles.

There is thus a need to improve the thermal conductivity of PCM materials to provide for more efficient heat storage or heat exchange devices, such as thermal batteries.

### Short disclosure of the invention

It is an aim of the present invention to improve the thermal conductivity of existing PCMs.

It is another aim of this invention to optimise the latent heat storage capacity of existing PCMs.

It is yet another aim of this invention to provide for a method of increasing the thermal conductivity, which can be applied to a wide range of PCMs.

It is yet another aim of this invention to provide for an alternative modified PCM with increased thermal conductivity.

According to the invention, one or more of these aims are attained by the object of the attached claims and in particular by the independent claims. The dependent claims concern further advantageous embodiments of this invention.

Specifically, at least one of the above-stated aims is attained by a phase change material (PCM) composition, comprising a PCM component, which may be a salt-hydrate PCM component, an organic PCM component or a eutectic PCM component, thermo-conductive filler particles and expanded graphite.

The PCM composition may comprise water as a solvent. Salt-hydrate PCMs are generally prepared with an aqueous solvent such as water.

The expanded graphite material, as well as the thermo-conductive filler particles, are both thermally conductive and therefore also jointly referred to as thermally conductive components.

The thermo-conductive filler particles may for example be graphite flakes. They may also be made of another thermally conductive material. The thermo-conductive filler particles may for example be metal-based particles.

Graphite flakes are particularly advantageous as they are more lightweight than metal-based conductive particles, such as copper and aluminium particles, while having a comparable or better value of thermal conductivity.

Moreover, based on the non-poisonous nature of graphite, using graphite flakes as thermo-conductive filler particles allows for the production of non-toxic PCM compositions.

As an additional advantage, the use of thermo-conductive graphite components in the PCM composition allows to significantly lower the cost in the PCM material used in radiators, heat, ventilation and air conditioning (HVAC) systems, thus rendering these devices more economical.

In one embodiment the expanded graphite material has a mean particle size of 5 µm to 2000 µm, of 10µm to 1500 µm, or of 20 µm to 1200 µm, or of 50 µm to 600 µm. Expanded graphite material of this type is particularly suited for forming a porous network in the PCM composition.

In one embodiment the PCM composition comprises of 5wt.% to 12wt.%, for example 6wt % to 9wt.% of expanded graphite. It was found that expanded graphite within this range formed a stable graphite network in a sodium acetate trihydrate (SAT) PCM composition. It is expected that these concentrations are equally suited for the formation of a stable network in other salt-hydrate PCM compositions. The same range of concentrations is further expected to be suited for organic PCM compositions.

In one embodiment the thermo-conductive filler particles have a mean size no larger than 700 µm, for example a mean size of 30 µm to 500 µm, or of 40 µm to 100 µm, or of 40 µm to 50 µm. It was found that the combination of expanded graphite with thermo-conductive filler particles, such as graphite flakes, drastically increased the thermal conductivity. The amount of increase was dependent on the particle size of both, the expanded graphite and the thermo-conductive filler particles, in this case graphite flakes. The relative sizes of these particles to one another influenced the amplification factor of the measured thermal conductivity over the thermal conductivity values obtained for expanded graphite PCM compositions without the thermo-conductive filler particles. Generally, increases of 2 to 4.5 times of thermal conductivity were achieved by adding graphite flakes to an SAT PCM composition comprising expanded graphite.

Expanded graphite with a mean particle size of 5 µm showed little or no increase in thermal conductivity of the PCM composition when graphite flakes ranging from 44µm to 500µm were added. It is therefore thought that a minimum particle size of the expanded graphite is required to enable the synergistic enhancement of its thermal conductivity using thermo-conductive filler particles.

Without wishing to be bound by any particular hypothesis, it is postulated that the network formed by the expanded graphite in the PCM solution provides for pores and cavities in which the thermo-conductive filler particles can enter to form conductive bridges within these pores or cavities, thus amplifying the thermal conductivity and as a result the thermal conductivity of the expanded graphite network. In other words, it is postulated that the thermo-conductive filler particles are adsorbed by the expanded graphite network to boost the network's conductivity. The expanded graphite network basically provides a scaffold into which the thermo-conductive filler particles penetrate to form additional conductive pathways within the expanded graphite material.

In support of this hypothesis, it was observed that the relative particle size of the expanded graphite and the thermo-conductive filler particles influenced the rate of increase of the measured thermal conductivity.

In one embodiment the mean size particle size of the thermo-conductive filler particles is no more than 2 times larger than the mean particle size of the expanded graphite. Based on the experimental results obtained it is postulated that expanded graphite material with a mean particle of size of about half the size of the thermo-conductive filler particles form networks with sufficiently large pores and cavities to incorporate the filler particles.

In one embodiment the concentration of the thermo-conductive filler particles in the PCM composition is at least 5wt.%. The concentration may range from 5wt.% to 50wt.%, or from 10wt.% to 40wt.%, or from 15wt.% to 30wt.%. It was found that concentrations of graphite flakes of less than 5wt.% in an SAT PCM composition were little or not effective in enhancing the thermal conductivity of the expanded graphite network in the composition.

This invention is the first report of a stable incorporation of a thermal enhancer in a PCM composition, which does not result in segregation of the composition.

In one embodiment the PCM component is a salt hydrate PCM component, such as a sodium acetate trihydrate (SAT) PCM component.

Sodium acetate trihydrate (SAT) has a high latent heat capacity, it is non-toxic, widely available and relatively economical. It is therefore particularly suited for producing industrial amounts of a non-toxic PCM with improved thermal conductivity.

The SAT PCM component may be present at 20wt.% to 80wt.%, preferably from 35wt.% to 55wt.% in the composition.

The invention is however not particularly limited to an SAT PCM component. It may be another salt-hydrate PCM component. It may be for example be a calcium salt-hydrate PCM, a potassium salt-hydrate PCM, or a sodium salt hydrate PCM, such as sodium hydrogen phosphate (DSP) PCM.

The PCM component may also be an organic PCM component, such as a paraffin wax PCM of a fatty acid PCM. The PCM component may be a eutectic mixture PCM.

The PCM component may be selected according to the intended application. The melting point of the selected PCM should be within a suitable range for the intended application.

Salt-hydrate and eutectic PCMs may comprise salt hydrates with similar crystal structure, such as a combination of sodium tetraborate decahydrate and sodium sulphate decahydrate. The mixing of salts with similar crystal structure may assist to reduce or even prevent supercooling behaviour of the PCM.

For the preparation of a salt-hydrate PCM composition, any form of a dissolvable salt-hydrate may be used. Any type of crystal of these salts may be used to prepare the respective PCM solution.

In one embodiment the PCM composition comprises a melting point depressing agent, for example, a eutectic solvent or a eutectic salt, to adjust the melting temperature of the PCM composition. The melting point depressing agent may for example be a deep eutectic solvent or a hydrated simple salt eutectic. The melting point depressing agent be chosen according to the PCM component of the composition.

A eutectic system is a homogeneous mixture of two or more substances which form a super-lattice at certain concentrations. The eutectic mixture melts and solidifies at a lower temperature than the melting temperatures of any of the individual substances.

Deep eutectic solvents (DES) are solutions of Lewis or Bronsted acids and bases which form a eutectic mixture. The initial parent solutions engage in complex hydrogen bonding which results in significant freezing point depression compared to either one of the parent compounds. Typically, DES are used as green solvents, in electrochemical processes and/or in catalysis.

In simple hydrated simple salt eutectics (HSSE), it is a mixture of two or more salts, whereby one of the salts is hydrated, for example sodium acetate trihydrate (SAT). When the two salts are combined at concentrations corresponding to the eutectic point, the eutectic mixture melts at a lower temperature than either of the salts in its own. Simple salt eutectics are held together by weak intermolecular forces, such as dipole-dipole interactions, or dispersion forces.

A salt-hydrate PCM composition or a eutectic PCM composition of this invention may comprise DES or HSSE agents.

For SAT PCM compositions DES include urea, acetamide, glycine, TRIS (Tris(hydroxymethyl)aminomethane), 1,1,1,TRIS (1,1,1-Tris(hydroxymethyl)-ethane), Erythritol, Propylene glycol, Tartaric acid, Bicine (N,N-Bis-(2-hydroxyethyl)-glycine), Tricine (N-[Tris-(hydroxymethyl)-methyl]-glycin), Glycylglycin (Gly-Gly), Ethylene glycol (1,2-Ethandiol), HEPES (4-(2-Hydroxyethyl)piperazine-1-ethanesulfonic acid), D-sorbitol, citric acid, gallic acid, caffeic acid, allantoin, sodium gluconate, N-methyl-D-glucamine, L-serine, xylose and maltose.

For SAT PCM compositions melting point depressing salts include KCl, KNO₃, KH₂PO₄, K₂HPO₄, K₃PO₄, NH₄Cl, NH₄NO₃, NH₄H₂PO₄, (NH₄)₂HPO₄, (NH₄)₃PO₄, or a combination thereof. The salts may be provided at eutectic point concentrations to the PCM composition to form a eutectic solution. The above-mentioned salts may however also act as melting point depressing agents outside the eutectic point concentrations. The concentrations at which melting point depressing agents, including eutectic agents, need to be provided to lower the melting temperature of the salt-hydrate PCM composition depends on the specific agent and the PCM composition.

In one embodiment the PCM composition, which may be a salt-hydrate composition, for example an SAT PCM composition or a DSP PCM composition, comprises a stabilizing polymer. The stabilizing polymer increases the thermal and/or chemical stability of the PCM composition.

The stabilizing polymer may for example be a poly(4-styrenesulfonic acid-co-maleic acid), also referred to as P4SSA-co-MA or P4SSA, a poly(methyl vinyl ether-alt-maleic acid), also referred to as PMVEMA, and/or a polystyrene sulfonic acid or a polystyrene sulfonate, also referred to as PSS. These stabilizing polymers may be provided at suitable concentrations to the PCM composition as described by WO2024180405.

As is commonly provided with PCM compositions, the composition of this invention may comprise a suitable nucleation promoter. Nucleation promoters are known in the art. Nucleation promoters may for example be independently selected from disodium hydrogen phosphate (DSP) and hydrated forms thereof, tetrasodium pyrophosphate (TSPP) and hydrated forms thereof, titanium oxide (TiO2). A combination of different nucleation promoters may be present in the PCM composition.

In one embodiment the PCM composition may be a hydrogel.

It may for example be an SAT PCM hydrogel as described by Liu Xingru et al (Liu Xingru et al; Solar Energy Materials and Solar Cells 268 (2024): 112754) or by Xiao Qiangqiang et al (Xiao Qiangqiang et al; Energy 165 (2018): 1240-1247). However, the invention is also suited for other hydrogel formulations of SAT PCM compositions or other salt-hydrate, eutectic or organic PCM compositions.

The invention also concerns a process for preparing a salt-hydrate PCM composition according to this invention.

The process comprises dissolving an anhydrous salt-hydrate PCM, for example an SAT PCM in an aqueous solvent. The mixture is heated until the PCM component is fully dissolved. For the preparation of an SAT PCM composition sodium acetate is heated to about 80°C until fully dissolved in water.

In a subsequent step expanded graphite is added to the aqueous PCM mixture. The mixture is then stirred to allow for the formation of an expanded graphite network. The network is formed when the reaction mixture becomes smooth.

An aqueous solvent may be water, for example pure and/or distilled water. Alternatively, an aqueous solvent may be a solution or mixture including water as the solvent. The aqueous solvent may therefore comprise further components.

In a next step, the thermo-conductive filler particles, for example graphite flakes, are then added to the PCM mixture, which is stirred to allow the particles to enter into the pores and cavity of the expanded graphite network.

For the production of a PCM composition containing one or more stabilizing polymers, the stabilizing polymers need to be fully dissolved in an aqueous solvent before the salt-hydrate PCM component is added. Dissolving the stabilizing polymer may require heating to an adequate temperature and stirring the aqueous solution.

Once the stabilizing polymer is dissolved, the salt-hydrate PCM, for example sodium acetate anhydrous, is added to the aqueous solution. The solution is stirred until the salt-hydrate is completely dissolved.

The subsequent production steps are then performed as outlined above.

If a nucleation promoter is desired in the PCM composition, it should be added to the aqueous PCM solution once the salt-hydrate is dissolved. If the temperature was increased, it may be required to lower the temperature of the mixture to room temperature or below before adding the nuclear promoter to avoid damaging it. Dissolving the nucleation promoter usually involves stirring the PCM solution. The expanded graphite is added once the nucleation promoter is dissolved and the subsequent production steps are performed as outlined above.

The invention also concerns a device for heat storage or for heat transfer comprising the PCM composition of this invention. The heat storage device may form part of a heat storage or heat transfer system. The device may be a heat exchanger device. The device may for example be a thermal battery.

The device of this invention may be used for heating or cooling applications.

The device may be used for applications such as for HVAC systems, refrigeration and for industrial processes requiring an optimized heat exchange.

Conventional PCM-based heat exchange or storage devices use thin metal fins attached to the primary heat transfer surface, usually conduits which are wound through the PCM material, to increase the available surface area. By adding fins, the exchanger can transfer more heat between fluids, even if the exchanger itself remains compact. To further increase the efficiency of the heat transfer the conduits or tubes are usually made of a highly thermally conductive metal, such as copper or aluminium.

A finned structure is especially useful when one fluid has a much lower heat transfer coefficient than the other, for example, when transferring heat between air and a liquid. The fins create more contact points, boosting the heat transfer rate without requiring a much larger or bulkier exchanger.

The exceptional thermal conductivity of the PCM composition in this invention allows for a simplified heat exchanger design. This enhanced composition makes it possible to use heat exchangers without fins and with conduits made from materials with lower thermal conductivity. Additionally, the contact surface area between the PCM and the heat transfer medium can be reduced without compromising thermal storage and transfer performance. This enables a more spaced-out tubing arrangement within the PCM material, further simplifying the design, reducing costs, and rendering the production of the device more efficient.

Notably, the design enables the replacement of the conventionally used high-end materials like copper and aluminium tubing with stainless steel tubing, which is not only more cost-effective but also stronger and more durable.

The thermal conductivity of steel is approximately 45 W/(m*K), which is very low compared to copper having a thermal conductivity value of about 398 W/(m*K) and aluminium of about 235 W/(m*K). Steel would not be an option for tubing material for conventional heat exchangers, as the efficiency of thermal transfer would simply be too low for an operational device. However, for heat exchange devices comprising the enhanced PCM composition of this invention, the excellent thermal conductivity of the PCM composition compensates for a significant decrease in thermal conductivity in the tubing material, thus allowing to replace the highly conductive copper or aluminium tubing material with a less conductive material, such as steel.

The tubing material of a heat exchanger comprising the enhanced PCM composition of this invention may have a thermal conductivity value of less than 200 W/(m*K), less than 150 W/(m*K), less than 100 W/(m*K), or less than 70 W/(m*K), or less than 50 W/(m*K). In order to be still functional, it should however have at least a thermal conductivity of 10 W/(m*K).

In one embodiment the material of the conduits passing through the PCM composition is stainless steel. Stainless steel is the preferred type of steel, as it is corrosion resistant.

### Short description of the drawings

Exemplar embodiments of the invention are disclosed in the description and illustrated by the drawings in which:

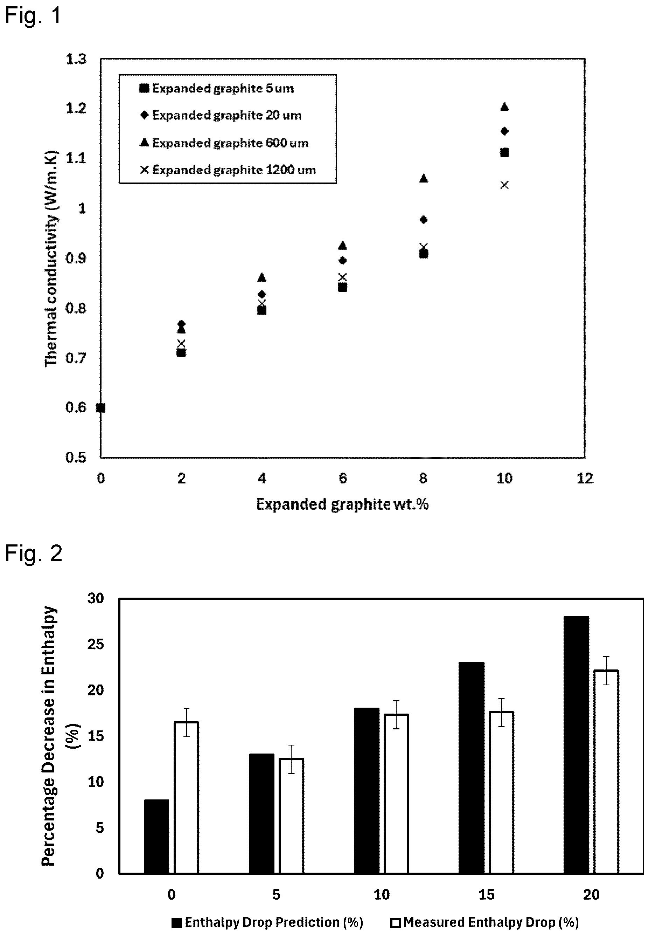

**Figure 1** is a graph showing experimentally determined thermal conductivities of a dose range of expanded graphite components having the indicated particle sizes in an SAT PCM composition comprising 0 to 10wt.% of expanded graphite in an SAT PCM solution consisting of 56.13wt.% sodium acetate, 37.43wt.% deionised water, 2.65wt.% DSP (as a nucleation promoter) and 3.79wt.% of stabilising polymer;
**Figure 2** is a bar chart showing predicted % decrease in enthalpy (black bars) and measured % decrease in enthalpy (white bars) for SAT PCM composition comprising 8wt.% expanded graphite and 0, 5, 10, 15, 20 and 25 wt.% graphite flakes in a with the SAT PCM c solution consisting of 56.13wt.% sodium acetate, 37.43wt.% deionised water, 2.65wt.% DSP (as a nucleation promoter) and 3.79wt.% of stabilising polymer; experiments were repeated 3 times, with error bars indicating standard deviations;

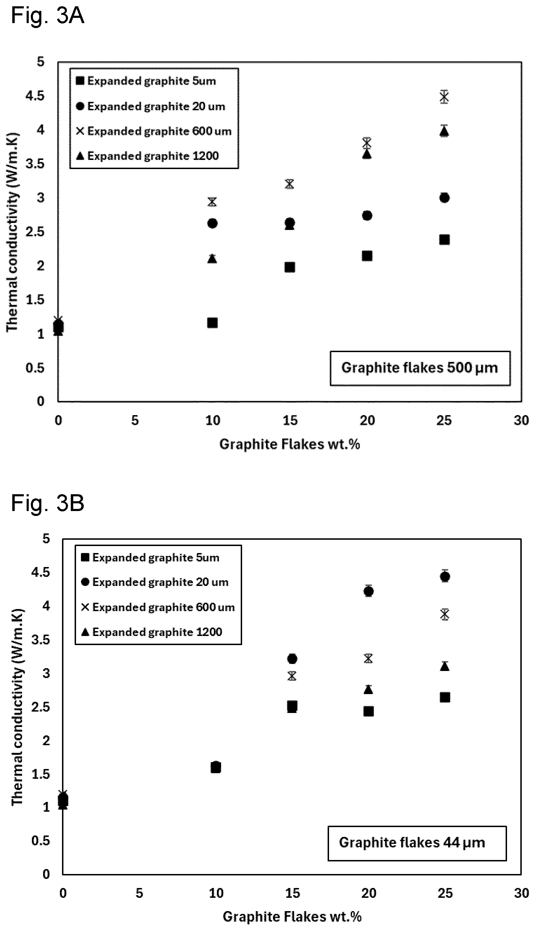

**Figure 3A** is a graph showing experimentally determined thermal conductivities of a dose range of expanded graphite components having the indicated particle sizes and graphite flakes having a mean particle size of 500 µm in an SAT PCM composition containing 9.5wt.% expanded graphite, experiments were repeated 3 times, with error bars indicating standard deviations;
**Figure 3B** is a graph showing experimentally determined thermal conductivities of a dose range of expanded graphite components having the indicated particle sizes and graphite flakes having a mean particle size of 44 µm in an SAT PCM composition, experiments were repeated 3 times, with error bars indicating standard deviations;

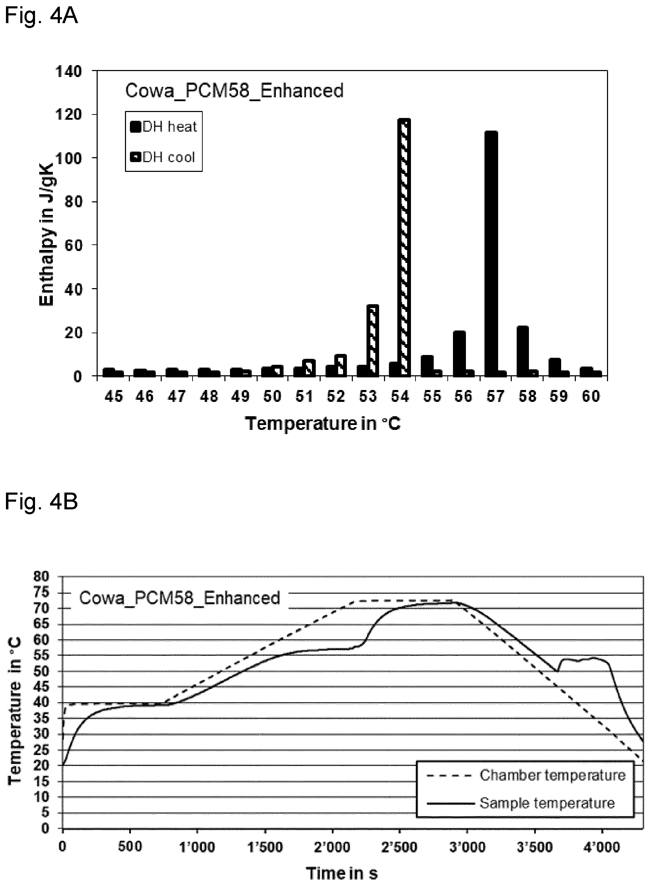

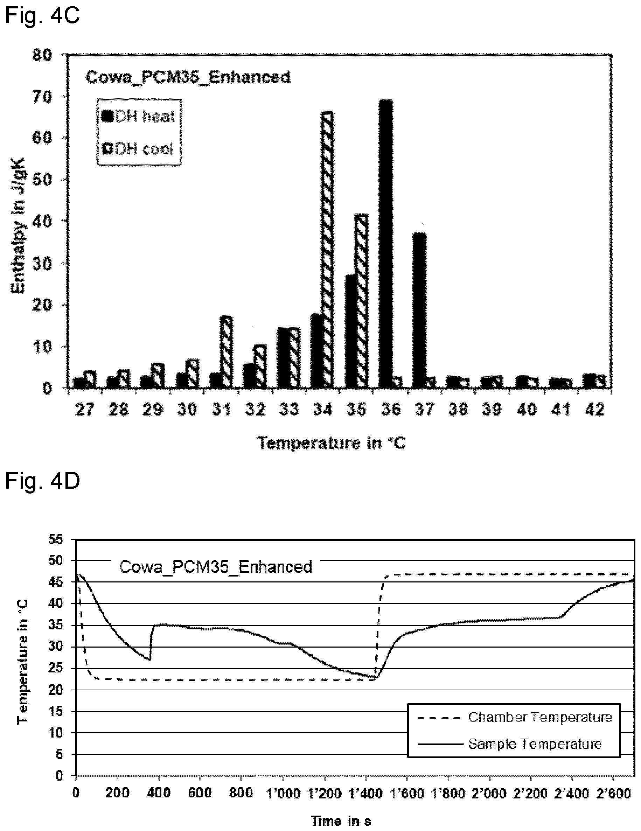

**Figure 4A to 4D** show 3D layer calorimetric measurements and specific heat capacity in J/(g*K) results for an enhanced SAT PCM and DSP PCM compositions according to this invention comprising expanded graphite with a mean particle size of 600 µm and graphite flakes of a mean particle size of 500 µm, with
**Figure 4A** showing a bar chart of the changes in enthalpy of an enhanced SAT PCM in during heating (black bars) and cooling (striped bars);
**Figure 4B** showing the corresponding temperature profile of the enhanced SAT PCM composition with the actual temperature of the SAT PCM composition (solid line) and the oven chamber temperature during the experiment (dashed line);
**Figure 4C** showing a bar chart of the changes in enthalpy of an enhanced DSP PCM composition in during heating (black bars) and cooling (striped bars); and with
**Figure 4D** showing the corresponding temperature profile of the enhanced DSP PCM composition with the actual temperature of the DSP PCM composition (solid line) and the oven chamber temperature during the experiment (dashed line).
**Figure 5A** shows heat curves of the first cycle (solid line) and the 150th cycle of an enhanced SAT PCM composition according to this invention having a melting point (Tₘ) at 58°C, which was subjected to thermal cycling;
**Figure 5B** shows heat curves of the first cycle (solid line) and the 150th cycle of an enhanced SAT PCM composition according to this invention having a melting point (Tₘ) at 45°C, which was subjected to thermal cycling;
**Figure 5C** shows heat curves of the first cycle (solid line) and the 150th cycle of an enhanced DSP PCM composition according to this invention having a melting point (Tₘ) at 35°C, which was subjected to thermal cycling;
**Figure 6A** shows a prior art example of conduits of a finned heat exchanger of a conventional PCM-based heat exchanger device,
**Figure 6B** is a schematic illustration of an arrangement of conduits of a heat exchanger suitable for use with the enhanced PCM composition of this invention;
**Figure 6C** is a schematic illustration of an alternative embodiment of an arrangement of heat exchanger conduits according suitable for combination with the enhanced PCM composition of this invention.

### Examples of embodiments of the present invention

The study set out to find new PCM compositions that improved thermal conductivity. In addition, it was desirable to optimise the enthalpy of fusion, i.e. the latent heat storage capacity, of these highly thermally conductive PCM compositions.

To allow for scaling of the PCM compositions to industrial amounts and their application in industrial settings, thermal and chemical stability, processability, as well as cost-effectiveness of the improved thermally conductive PCM composition were further desirable properties of the composition.

Ideally, the PCM composition should be non-toxic to prevent environmental contamination from harmful or polluting chemicals.

### Choice of PCM component

For this study sodium acetate PCM (SAT PCM) was selected as an exemplary salt-hydrate based PCM, since it is non-toxic, scalable, widely used different industries, and available at reasonable cost. It is however also possible to use other salt-hydrates PCMs instead of SAT PCM material.

Sodium acetate trihydrate, NaOAc·3H₂O, also known as SAT, has a melting point at 58°C and is a PCM which is particularly suited and commonly used in building applications, as well as in water heating, cooling, or thermal storage system. The anhydrous form of SAT is known as SA. By lowering the melting point of an SAT PCM composition, the composition may be adapted for other applications requiring thermal regulation at lower temperatures, for medical applications.

Further experiments to confirm that the invention is also suitable for other salt-hydrate PCMs, were performed using a disodium hydrogen phosphate (DSP) PCM, which is a promising phase change material due to its melting point at around 35°C, high phase change enthalpy, low costs, safety and high compatibility with metals.

In should be noted that DSP can also act as a nucleation promoter if provided at concentrations of 0.1wt.% to 5wt.% in a salt-hydrate PCM which is not a DSP PCM composition. In some of the experiments performed with SAT PCM compositions, DSP was provided as a nucleation promoter.

The composition of this invention comprises preferably from 20wt.% to 80wt.%, preferably from 35wt.% to 55wt.%, for example 45wt.%, of the salt component of the PCM. The salt may be provided in its anhydrous form for the preparation of the composition.

### Stabilization ranges of expanded graphite

In a first set of experiments the suitability of expanded graphite as a thermal conductor in an SAT-PCM composition was assessed. For this purpose, the expanded graphite should form a stable network in the PCM composition. The stabilization range should not be affected by the amount of the SAT PCM component in the SAT PCM composition.

The stabilization range of expanded graphite material having different mean particle sizes in an SAT PCM composition containing 94wt.% to 91wt.% of the SAT PCM solution was tested. For expanded graphite having a mean particle size of 1200 µm a stabilization range of 6wt.% to 9wt.% was determined. At concentrations of over 9wt.% of this expanded graphite component the SAT PCM composition was no longer processable. The composition could no longer flow and had to be spooned out of the reaction vessel instead.

The stabilization range determined for expanded graphite having a mean particle size of 600 µm was determined to be 7wt.% to 10wt.%. Above 10wt.% the SAT PCM composition could no longer be stirred using a magnetic stirrer and became very difficult to process. For the formation of a stable network without separation a minimum concentration of 7wt.% of this expanded graphite material was required in the SAT PCM composition.

### Thermal conductivity of different sizes of expanded graphite in the PCM composition

To determine the effect of the particle size of expanded graphite material on its thermal conductivity, different weight percentages of expanded graphite having mean particle sizes of 5 µm, 20 µm, 600 µm and 1200 µm were compared. Thermal conductivities of the composition comprising up to 10wt.% of expanded graphite material were determined.

Figure 1 shows the thermal conductivities, determined as (W / m*K) at different concentrations of expanded graphite components having different particle sizes, as indicated in the graph. The PCM composition contained 100wt.% to 90wt.% of the SAT PCM solution.

Interestingly, the thermal conductivity for the expanded graphite with particle sizes of 20 µm or 600 µm were higher than expanded graphite with particle sizes of 1200 µm. It is thought that this somewhat unexpected behaviour may be due to one or more of the following:

Firstly, the differences in particle size may affect the particle packing density. According to this hypothesis, smaller particles fill the spaces between larger particles more effectively, thereby reducing the volume of voids or pockets between the particles which are poor thermal conductors.

The effect might also be attributed to a lower contact resistance when expanded graphite with smaller sized particles is used. Since smaller graphite particles have a higher surface area relative to their volume than larger particles, the number of contact points within the PCM composition is increased.

Moreover, smaller particles tend to behave more isotropically than larger particles when dispersed.

In addition, smaller particles may help achieve thermal percolation threshold more effectively than larger particles.

Interestingly, at expanded graphite concentrations of 6wt.% and above a steeper increase of thermal conductivity was observed when the expanded graphite concentration was further increased. This result indicates that this is the weight percentage at which the expanded graphite forms a network, allowing for percolation through the SAT PCM composition.

The highest thermal conductivity values were measured for compositions comprising expanded graphite mean particle sizes of 20 µm or 600 µm.

Even though good thermal conductivities of up to 1.2 W / m*K had been achieved, it was investigated whether the composition could be modified to further boost these values.

For subsequent experiments PCM compositions comprising expanded graphite mean particle sizes of 600 µm were used.

### Thermally conductive fillers synergise with expanded graphite to boost thermal conductivity

It was postulated that thermo-conductive filler particles, such as graphite flakes might further enhance the thermal conductivity of PCM compositions comprising expanded graphite.

To test this, the maximum loading capacity of an SAT PCM composition comprising 9.5wt.% of expanded graphite having a mean particle size of 600 µm was determined.

A direct linear correlation between the total amount of graphite added, i.e. expanded graphite and graphite flakes, and the decrease in enthalpy of the SAT PCM composition was observed (see Figure 2). The measurements were performed with differential scanning calorimetry (DSC).

The decrease in enthalpy was calculated according to the following equation: $ΔH % = wEG + wGF ,$
with ΔH% being the percentage decrease in enthalpy of the PCM due to additives,
wEG being the weight percentage added of expanded graphite in the mixture relative to the total amount of PCM mass,
wGF = weight percentage added of graphite flakes in the mixture relative to the total PCM mass.

The SAT PCM compositions shown in Figure 2 contained 8wt.% of expanded graphite and graphite flakes provided at 0w%, 5wt.% 10wt.% 15wt.% and 20 wt.%. Based in this direct correlation of decrease in enthalpy with increase in graphite flakes, it was concluded that up to 30% of the enthalpy of fusion for the application could be sacrificed for an increase in the thermal conductivity to about 4 W/ (m*K) to obtain a highly efficient PCM composition.

Based on these results it was decided to complement the SAT PCM composition with 9.5 wt.% of expanded graphite and with 15 wt.% of graphite flakes to achieve an optimal balance between thermal conductivity and latent heat capacity of the composition.

### Particle sizes of thermally conductive components relevant for boosting conductivity

To investigate whether the particle size of the thermo-conductive filler particles has an effect on the observed synergism between the two types of thermally conductive components, i.e. the expanded graphite and the filler particles, a further series of experiments was performed using an SAT PCM composition with 90.5wt.% to 65.6wt.% SAT PCM solution, with 9.5 wt.% of expanded graphite of different mean particle sizes and 0-25wt.% of graphite flakes of different mean particle sizes.

The results of these experiments are shown in Figures 3A and 3B.

Graphite flakes of a mesh size of 35 or of 325, corresponding to a mean particle size of 500 µm or 44 µm respectively, were tested in SAT PCM compositions comprising 90.5wt.% to 65.6 wt.% of the SAT PCM solution and 9.5wt.% of expanded graphite with different mean particle sizes as indicated in the Figures.

In all cases, thermal conductivity of the PCM composition increased with the graphite flakes weight percentage.

It was however noticed that the smaller graphite flakes, specifically flakes of a mean particle size of 44 µm, showed low thermal conductivities with expanded graphite having a mean size of 5 µm. It is hypothesized that this is due to the size of the graphite flakes being larger than the pores and cavities formed in the expanded graphite with this small particle size. The graphite flakes can therefore not enter into the pores and cavities and cannot sit between the graphite layers of the expanded graphite to form conductive bridges or pathways. This hypothesis is supported by the results obtained for expanded graphite material with larger particles (Figure 3A).

The data demonstrates that expanded graphite with particles of a mean size of 20 µm exhibits the largest thermal conductivity, suggesting that the pores formed by expanded graphite with this size of particles is large enough for the 44 µm graphite flakes to be incorporated into the expanded graphite material and to form conductive pathways in the pores and cavities.

Similar results were also obtained for larger graphite flakes having a mean size of 500 µm, whereby the thermal conductivity values for 5 µm and 20 µm expanded graphite were lower than for 600 µm and 1200 µm (Figure 3B).

The results indicate that in order to achieve optimal thermal conductivity, thermo-conductive filler particles of a particular particle size should be paired with an expanded graphite material having a mean size of a specific range, which depends on the particle size of the thermo-conductive filler particles.

Based on the results, it is postulated that the mean/median size particle size of the thermo-conductive filler particles should be no more than 2 times larger than the mean/median size particle size of the expanded graphite to achieve a good enhancement of the thermal conductivity of the expanded graphite material.

### Enhanced SAT-PCM compositions

To test the performance of SAT-PCM compositions comprising expanded graphite material and graphite flakes as thermo-conductive filler particles, also referred to as "enhanced" SAT-PCM, a series of SAT-PCM compositions with different melting points were produced following the synthesis protocol detailed in the Methods section below.

The enhanced SAT-PCT composition was prepared by adding expanded graphite or thermo-conductive filler particles to an SAT PCM solution. This SAT-PCM solution consisted of 56.13wt.% sodium acetate, 37.43wt.% deionised water, 2.65 DSP (as a nucleation promoter) and 3.79wt.% of stabilising polymer in all experiments shown, unless indicated otherwise.

### Example 1: enhanced SAT-PCM composition with Tₘ 58°C

An enhanced SAT PCM composition having a melting point of 58°C contained the following components (final concentrations of the SAT PCM composition are indicated):

| Material | Weight percentage (%) | Role |
|---|---|---|
| Sodium acetate anhydrous | 42.38 | Salt component PCM |
| Deionised water | 28.26 | Solvent component PCM |
| Disodium hydrogen phosphate | 2.00 | Nucleation promoter |
| Poly (4-styrene sulfonic acid co-maleic acid) | 2.86 | Stabilising polymer |
| Expanded graphite (600 µm) | 9.50 | Thermally conductive scaffold |
| Graphite flakes (500 µm) | 15.00 | Thermally conductive filler |

The latent heat storage capacity, measured as the material's enthalpy, of this enhanced SAT PCM composition was determined in a 3-layer calorimetric assay, as described below. The results of this assay are shown in Figure 4A.

The enthalpy values of the enhanced SAT-PCM composition containing 25wt.% of thermally conductive graphite components were very good, about 25% lower as values obtained for an SAT PCM without the thermally conductive components. This corresponded well with the expected decrease for this amount of graphite material in the composition.

Figure 4A shows the corresponding temperature profile of the enhanced SAT PCM composition during heating (solid line) and cooling (dashed line) in the 3D calorimetric assay.

The results thus indicate, that the heat storage capacity of the enhanced SAT PCM composition was satisfactory and that the graphite components exhibited no adverse effect on the heat storage capacity of the PCM composition other than replacing some of its volume.

The results furthermore demonstrated that the added thermally conductive components did not affect crystallization of the SAT PCM material, which maintained its usual sharp nucleation temperature of 54°C.

Moreover, the thermally conductive components did not depress the melting point of the SAT PCM, which remained at the usual 58°C.

To determine the thermal conductivity of the enhanced SAT PCM composition, three separate samples were prepared and shaped into two rectangular solid blocks each. The blocks were prepared as follows; the PCM mixture was poured into stainless steel rectangular molds (5x8x4 cm), whilst the mixture was still liquid, a stainless-steel block was placed on top of the PCM mixture in the mold to ensure that it remained flat. The PCM mixture was kept in mold until it was fully solidified, which took approximately 15 minutes. It was then released from the mold and the block was formed.

The formed SAT-PCM blocks were sanded using standard sandpaper to remove bumps on the surface. For each sample five measurements were performed to determine an average conductivity of five measurements for three different samples, the sample averages.

The overall thermal conductivity average of the enhanced SAT-PCM composition, as determined on the basis of the three sample averages, was 4.61 W/m*K. This is an excellent value compared to the thermal conductivity of SAT PCM without the thermally conductive components, which averages at 0.741 W/m*K.

By complementing the SAT PCM composition with expanded graphite and graphite flakes at the indicated concentrations, the thermal conductivity of SAT PCM composition was thus increased more than 6-fold.

To test the stability of the enhanced SAT PCM composition, the composition was subjected to thermal cycling between 20-70°C. Three separate samples were subjected to 300 cycles each, taking 60 days to complete.

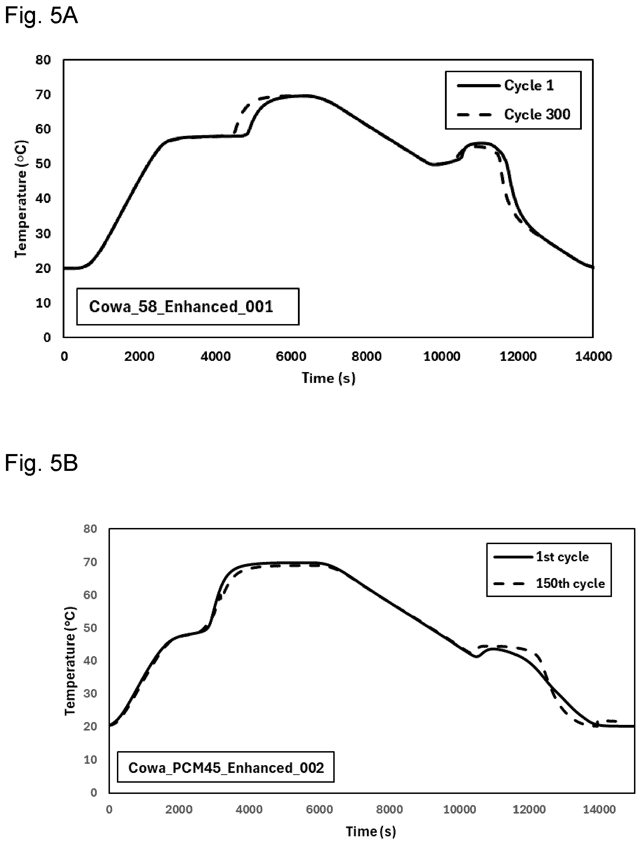

Figure 5A shows the thermal profile in the first cycle for each sample and the thermal profile in the last cycle for each sample. It can be observed that the crystallization profile, on the right-hand side of the curves looks the same at the 1^{st} cycle and at cycle 300. The degree of supercooling is not increasing or decreasing; this suggests that the nucleation promoter disodium hydrogen phosphate anhydrous (DSP) is kept stable within the expanded graphite network during cycling.

It was observed that the melting plateau was slightly longer in the first cycle compared to the 300^{th} cycle. A longer plateau would usually indicate that some time-dependent destabilization may have occurred. However, in this case, it was noticed that each falcon-tube containing the SAT-PCM composition was about 3g lighter after cycling compared to its initial weight of 50g. This suggests that the cycling was not completely water-tight and that the evaporation of water from the PCM composition had occurred. Despite this, the only slight shortening of the melting plateau after 300 cycles and the no change in the crystallization profile suggests that the expanded graphite network is extremely stable in the SAT PCM composition.

These excellent results obtained for the enhanced SAT PCM composition with its natural melting point at 58°C, encouraged the inventors to test whether thermal conductivity could also be enhanced in SAT PCM compositions comprising melting point depressing agents, such as eutectic solvents or eutectic salts.

Eutectic PCM compositions having melting temperatures of 45°C or of 35°C (Examples 2 to 4) were produced and provided with an expanded graphite network and graphite flakes according to the synthesis method described below. These eutectic compositions contained the same expanded graphite material and graphite flakes of the same particle size as the composition of this Example 1. The weight percentages of the thermally conductive graphite components also remained the same as in Example 1.

### Example 2: enhanced SAT-PCM composition with Tₘ 45°C

An enhanced SAT PCM composition having a melting point of 45°C contained the following components (final concentrations of the SAT

| Material | Weight percentage (%) | Role |
|---|---|---|
| Sodium acetate anhydrous | 33.48 | Salt component PCM |
| Deionised water | 22.04 | Solvent component PCM |
| Disodium hydrogen phosphate | 1.48 | Nucleation promoter |
| Tris(hydroxymethylaminomethane) | 18.51 | Eutectic solvent |
| Expanded graphite (600 µm) | 9.50 | Thermally conductive scaffold |
| Graphite flakes (500 µm) | 15.00 | Thermally conductive filler |

| | | |
|---|---|---|
| PCM composition are indicated): | | |

Tris(hydroxylmethylaminomethane), also referred to as Tris, was provided as a eutectic solvent in this composition. The melting point of the enhanced SAT PCM composition according to this Example 2 was 45°C. The addition of Tris to the enhanced SAT PCM composition therefore successfully lowered the melting temperature of the composition by 13°C. The same depression of melting temperature was observed for an SAT PCM composition without the thermally conductive components, confirming that these components do not affect the melting temperature of the composition.

The eutectic enhanced SAT PCM composition of this example also proved to have excellent thermal stability as observed in thermal cycling experiments.

As before, three falcon tubes were subjected to thermal cycling between 20-70°C. The samples were subjected to 150 cycles, which took 30 days to complete. Stability was typically gauged using 100 falcon-tube cycles, but in this experiment an additional 50 cycles were completed.

Figure 5B shows the thermal profile in the first cycle for one of a representative sample and the thermal profile in the last cycle for this sample. It can be observed that the crystallization profile, on the right-hand side of the curves looks almost the same for cycle 1 and for cycle 150. The degree of supercooling is not increasing or decreasing, which suggests that the nucleation promoter (DSP) is kept stable within the expanded graphite network during cycling.

### Example 3: enhanced DSP-PCM composition with Tₘ 35°C

An enhanced DSP PCM composition having a melting point of 35°C contained the following components (final concentrations of the DSP PCM composition are indicated):

| Material | Weight percentage (%) | Role |
|---|---|---|
| Disodium hydrogen phosphate | 27.17 | Salt component PCM |
| Deionised water | 46.54 | Solvent component PCM |
| Sodium polyacrylate cross-linked (polyethylene graft) | 0.72 | Stabilising polymer I |
| Poly (4-styrene sulfonic acid)-co maleic acid, sodium salt | 1.07 | Stabilising polymer II |
| Expanded graphite (600 µm) | 9.50 | Thermally conductive scaffold |
| Graphite flakes (500 µm) | 15.00 | Thermally conductive filler |

This DSP PCM composition was not supplemented with any additional nucleation promoters. The graphite particles act as nucleation promoters in this composition, as previously described in WO2024180405.

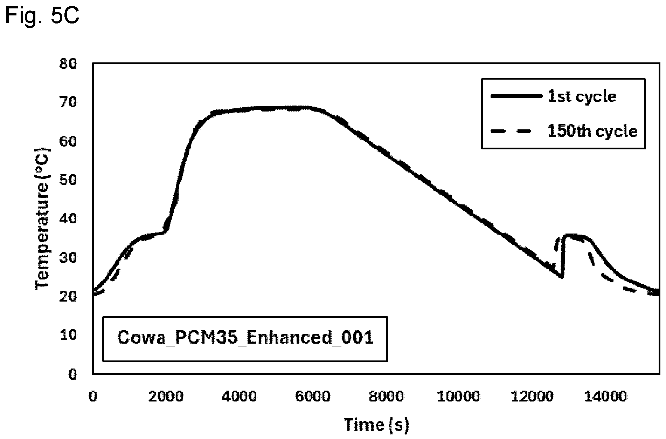

Figure 5C shows the thermal profiles of a representative thermal cycling experiment of 150 cycles performed with this enhanced DSP PCM composition. Almost no difference in profile was observed between the first cycle and the last cycle. It can be observed that the crystallization profile, on the right-hand side of the curves looks the same at the 1st cycle and at cycle 150. The degree of supercooling is not increasing or decreasing; this suggests that the expanded graphite network is stable as this is itself acting as the nucleating agent in this recipe.

### Example 4: enhanced DSP-PCM composition with Tₘ 35°C with nucleation promoter

An enhanced SAT PCM composition having a melting point of 35°C and containing a nucleation promoter comprised the following components (final concentrations of the DSP PCM composition are

| Material | Weight percentage (%) | Role |
|---|---|---|
| Disodium hydrogen phosphate | 25.76 | Salt component PCM |
| Deionised water | 44.12 | Solvent component PCM |
| Sodium polyacrylate cross-linked (polyethylene graft) | 1.44 | Stabilising polymer I |
| Poly (4-styrene sulfonic acid)-co maleic acid, sodium salt | 1.07 | Stabilising polymer II |
| Titanium dioxide | 0.72 | Nucleation promoter I |
| Sodium hydroxide | 2.39 | Nucleation promoter II |
| Expanded graphite (600 µm) | 9.50 | Thermally conductive scaffold |
| Graphite flakes (500 µm) | 15.00 | Thermally conductive filler |

indicated):

This DSP PCM composition was supplemented with Titanium dioxide and Sodium hydroxide as nucleation promoters.

When compared the DSP PCM composition of Example 3, the composition of Example 4 is more corrosive, as the pH of the composition of Example 3 is lower (pH Example 3 = 8.4). Also, the nucleation temperature of the DSP PCM composition of Example 3 was at 25°C, which was slightly lower than in Example 4 containing the additional nucleation promoters. The composition of Example 4 has a nucleation temperature of 28°C.

The results show that expanded graphite and thermos-conductive particles, such as graphite flakes synergistically enhance the thermal conductivity of salt- hydrate PCM compositions. The addition of these thermally conductive components did not adversely affect the latent heat storage capacity of the remaining volume of the PCM component in the composition. Moreover, the enhanced PCM compositions of this invention are extremely stable over 150 cycles and more, as demonstrated for SAT-based and DSP-based PCM compositions.

The enhanced PCM composition of this invention allows for a change in heat exchanger concept, switching from fin-tube heat exchangers which are usually manufactured using copper and aluminum, to tube heat exchanger concepts that allow for more degrees of freedom in terms of design.

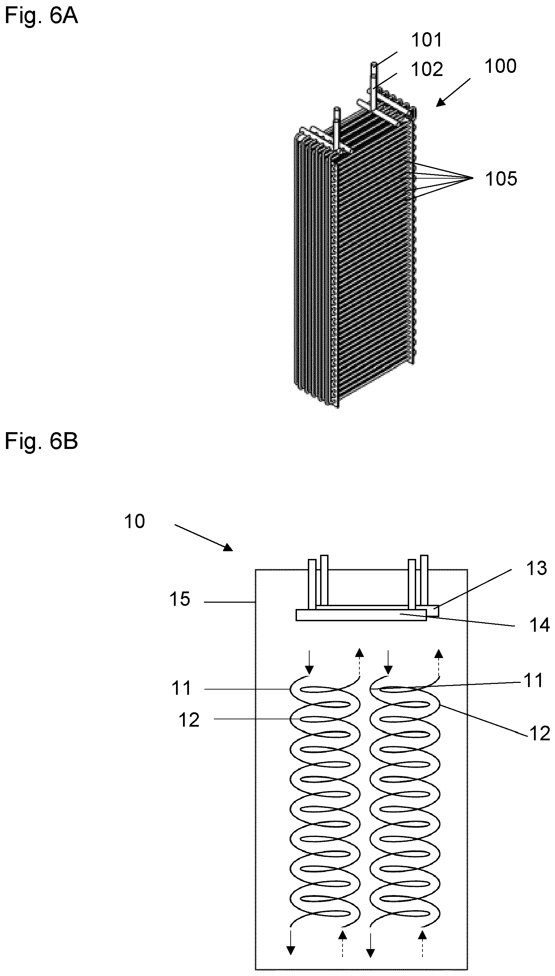

Figure 6A is a schematic illustration of a standard design for air to fluid heat exchangers (100) as known in the prior art. In this finned heat exchanger copper tubes wind through the surrounding PCM material (not shown) from top to bottom. The tubing is generally made of copper or of aluminium. The tubing is arranged in two separate circuits (101, 102), each circuit comprises stacked rows (105) formed by the wound tubing. The stacked rows arranged in a plane forming a fin. Each circuit comprises a plurality of fins, wherein the fins of the first circuit and the fins of the second circuit alternate in a stacked parallel arrangement. The fins are usually placed in 3 mm distance in cross-section of tubes. According to this invention a heat exchanger using the enhanced PCM composition may comprise corrugated tube windings, that are arranged in multiple parallel windings and two circuits, connected to collectors diverting the flow equally to all tubes.

A first model of a heat exchanger (10) which is adapted for combination with a PCM composition of enhanced conductivity is shown in Figure 6B.

The corrugated heat exchanger design of this invention comprises double coil windings (11, 12) which are each connected to a different circuit, as indicated by solid and dashed arrows, and which are intermeshed, such that the windings of one of the coils (11) intercalates with the windings of the other coil (12).

The geometry of the cross-section of the windings is not particularly limited. It may for example be circular, oval, rectangular, or triangular.

The windings of each coil (11, 12) overlap with one another as shown in Figure 6B. The two coils are surrounded by PCM material (not shown).

A first coil (11) may be used for charging. The heat transfer medium flows in a first direction, for example from the top to the bottom, through this first coil.

A second coil (12) may be used for storage. The heat transfer medium flows in a second direction, for example from the bottom to the top, through this second coil.

These coils (11, 12) are connected through collectors (13, 14) at their inlets and outlets. The coils are placed in a housing (15) comprising the PCM material (not shown) which surround the coils. Portions of the collectors project from the housing to provide externally accessible inlet and outlet openings for charging and discharging.

A two-port design is used to connect two different heat transfer fluid circuits, for example a heat pump and fresh water.

It is however also possible to operate the two in parallel if only one circuit is needed.

A series of double coils may be arranged in parallel.

The heat exchanger design may be further optimized depending on the application requirements and a given storage capacity and size. The design variables include the corrugated tube diameter, the coil pitch and winding size in x- and y-direction, the coil height, and the number of parallel coils.

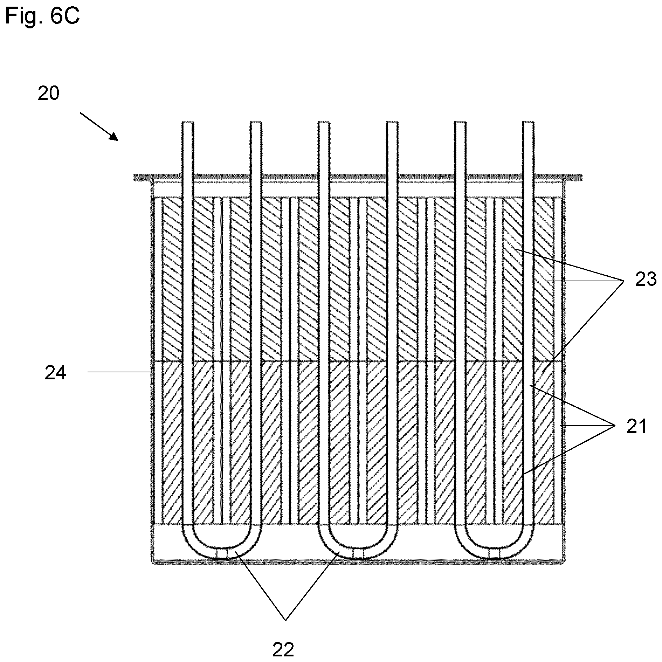

A second model of a heat exchanger (20) which is adapted for combination with a PCM composition of enhanced conductivity is shown in Figure 6C.

This heat exchanger comprises tubing in a serpentine arrangement, in with U turns (22) and straight portions which form parallel rows (21).

Optionally, the smooth tubes may be equipped with outwardly projecting fins (23). The fins may project radially from the outer surface of the tubes. The fins may be made of the same material as the tubes. Alternatively, the fins may be made of a different material, for example a highly thermally conductive metal such as copper or aluminium. The fins are thermally connected to the tubes. The fins thus provide an increased surface area for heat transfer between the heat transfer medium passing through the tubes and the PCM material surrounding the tubes.

The device preferably comprises several layers of the tubes, whereby alternating layers are either for charging and discharging, thereby creating a dual port heat exchanger.

The tubes and optional fins are surrounded by PCM material (not shown). The tubes and optional fins may be arranged in a housing (24).

It is however also possible to provide a multi-layered device with only one port for a single port heat exchanger.

The heat exchanger tubes used in the different simplified designs described above may be made from stainless steel or titanium. It is however also possible to use highly thermally conductive metals, such as copper and aluminium to further optimize the heat transfer. It is also possible that alloys of one or more of these metals, for example a titanium copper alloy, are used as material for the heat exchanger tubings.

The simplified heat exchanger models described herein are not strictly limited to use with the PCM composition of this invention. The designs are however only functional in combination with a PCM composition which has a thermal conductivity of at least 1.5 W/(m*K). Conventional salt-hydrate PCM compositions without graphite components of thermally conductive fillers generally have a thermal conductivity of about 0.4 to 0.6 W/(m*K).

### Methods

### Preparation of SAT PCM compositions

For compositions comprising stabilizing polymer poly 4 styrene sulfonic acid co maleic acid sodium salt (CAS: 68037-40-1) was heated to 80°C in deionized water and stirred until fully dissolved. In a subsequent step, the sodium acetate anhydrous (CAS: 127-09-3) (SA) was added to the mixture until it was fully dissolved.

For compositions without stabilizing polymer, the SA was dissolved in water as a first step at 80°C.

For compositions comprising DSP (CAS: 7558-79-4) as a nucleation promoter, the reaction mixture was adjusted to below 60°C, if necessary, before addition of DSP in order to avoid damaging it. The reaction mixture was stirred until no DSP clumps were visible.

In a next step, the expanded graphite (CAS: 7782-45-5) was added to the reaction mixture, which was stirred until smooth. At this point the expanded graphite network was formed within the SAT composition. Depending on the stirring rate and volume this step typically takes between 20-60 minutes.

Once expanded graphite network is formed, the graphite flakes (CAS: 7782-45-5) were added and the reaction mixture was stirred for another 60 minutes until the graphite flakes had incorporated into the expanded graphite network. It is important to allow the graphite flakes to incorporate into the expanded graphite network in order to avoid that the flakes for sediments in the composition.

The stochiometric ratio of sodium acetate and water in sodium acetate trihydrate is 60.4 wt.% and 39.7 wt.% respectively. However, it was found that because of the ability of expanded graphite to attract water, more water had to be added to ensure the sodium acetate trihydrate did not dehydrate, therefore the ratio used was sodium acetate (60 wt.%) and water (40 wt.%).

### Preparation of DSP PCM compositions

For the preparation of the DSP PCM composition example 3, 1.07wt.% of the polymer compound, P4SSA-co-MA was added to deionised water (46.54wt.%) provided as a solvent at 50°C and stirred until it was fully dissolved. In a subsequent step, 27.17wt.% DSP was added. The mixture was stirred thoroughly throughout the procedure, allowing for each of the added components to disperse homogeneously in the aqueous solution before adding the next component. In a further step, 0.72wt.% cross-linked sodium polyacrylate (crosslinked NaPAA) (CAS number 9003-04-7) was added to the mixture, which was then stirred for approximately 1 hour to result in the stabilized DSP PCM. The next step involved enhancing the conductivity through firstly, the addition of expanded graphite (9.5wt.%) (CAS number 7782-42-5). Expanded graphite was added into the mixture at 50°C and stirred until the mixture was smooth and no clumps of expanded graphite could be observed. Finally, the graphite flakes (CAS number 7782-42-5) were added (15wt.%) and stirred until they formed a smooth network within the expanded graphite, for approximately 1 hour.

For the preparation of the DSP PCM composition example 4, 1.07wt.% of the polymer compound, P4SSA-co-MA was added to deionized water (46.54wt.%) provided as a solvent at 50°C and stirred until it was fully dissolved. In subsequent steps, Titanium oxide (TiO₂) (CAS number 1317-80-2) (0.72wt.%), NaOH (CAS number 1310-73-2) (2.39wt.%) and 25.76wt.% DSP were added to the mixture. The mixture was stirred thoroughly throughout the procedure, allowing for each of the added components to disperse homogeneously in the aqueous solution before adding the next component. In a further step, 1.44wt.% cross-linked sodium polyacrylate (crosslinked NaPAA) (CAS number 9003-04-7) was added to the mixture, which was then stirred for approximately 1 hour to result in the stabilized DSP PCM. The next step involved enhancing the conductivity through firstly, the addition of expanded graphite (9.5wt.%) (CAS number 7782-42-5). Expanded graphite was added into the mixture at 50°C and stirred until the mixture was smooth and no clumps of expanded graphite could be observed. Finally, the graphite flakes (CAS number 7782-42-5) were added (15wt.%) and stirred until they formed a smooth network within the expanded graphite, for approximately 1 hour.

Titanium Oxide, TiO₂, and Sodium Hydroxide were provided as nucleators of the DSP salt. P4SSA-co-MA was provided as inhibitor to prevent the formation of anhydrous salt.

### Thermal conductivity assays

The solid PCM samples are placed on either side of the sensor element (THB6N sensor) of the Linseis THB device, ensuring uniform and intimate contact between each side of the sample surface and the THB sensor surface. Then, a controlled heat pulse of 175 mA is sent through the sensor, which is embedded between two samples of the PCM, and this causes a transient temperature rise within the PCM sample. The temperature response is then measured using the integrated temperature sensors of the THB device over 14 seconds. Analyzing the recorded transient temperature data using the devices evaluation software calculates the thermal conductivity. The measurements are repeated 6 times for each sample to ensure reproducibility and to calculate an average thermal conductivity value.

### Heat storage capacity - DSC calorimetry

The enthalpy-temperature relation determines the heat storage capacity of a PCM. This relation can be determined experimentally using calorimetric methods. A high enthalpy indicates a good latent heat storage capacity of the PCM.

To determine the enthalpy of the SAT PCM compositions, Differential Scanning Calorimetry (DSC) assays were performed.

DSC is a widely used method in thermal analysis. Using the DSC, the melting temperatures and the enthalpies associated with such transformations can be determined precisely. The specific heat capacity of a given material can also be measured. These properties are critical when characterizing PCMs for thermal energy storage applications.

Phase transitions are always associated with a change in phase change enthalpy and the working principle of DSC-analysis is based on the determination of this enthalpy. In order to test the SAT PCM compositions comprising different candidates for eutectic components, including their melting temperatures and enthalpies of fusion, the samples are subjected to thermal testing in the DSC.

The working principle of the DSC is that the sample is inserted into the DSC alongside a thermally inert reference substance, for example Quartz, and both samples are subjected to a time-linear temperature program, where both increases and decreases in the temperature are permittable. The DSC3+ calorimeter (Mettler Toledo, Columbus, OH, USA), which according to the manufacturer has an uncertainty in enthalpy of ± 8%, was used for all experiments of this study. In the experiments performed in this study 5-20 ± 0.0005 mg of each sample was provided for DSC measurements. Both, the reference sample and the sample to be tested, were subjected to the same thermal profile inside a heating and cooling chamber.

The samples were measured using two oppositely-switched thermocouples, one inserted into the sample to be tested and the other one inserted into the thermally inert reference. The resulting thermoelectric voltage is proportional to the heat flow of the sample.

The change in enthalpy of the tested sample was determined based on the temperature difference between the tested sample and the thermally inert reference sample using the following energy balance equation: $\frac{dq}{dt} = \frac{1}{R} \left({\sum }_{i = 1}^{N} {\left({ΔT}_{S 0}\right)}_{i} -{\sum }_{i = 1}^{N} {\left({ΔT}_{R 0}\right)}_{i}\right)$

The phase change enthalpy was determined by integration of the heat flow over a defined period of time, wherein the material was heated at a rate of 2 K min⁻¹.

### PCM material and heat storage capacity - 3-layer calorimetry

Measurement devices for determining the heat storage capacity of PCMs are usually based on small sample sizes, typically between 5µg and 10µg, which can be inaccurate when the sample has either a low thermal conductivity, a high thermal capacity over a small temperature range, or is inhomogeneous.

The 3-layer calorimetric method, which is well known in the art, addresses this issue and permits accurate measurement of larger sampling sizes. As an additional advantage, 3-layer calorimetry is a non-intrusive measurement methodology, permitting for subsequent use of the measured samples in further tests. It was therefore chosen as the appropriate method to determine heat capacity of SAT PCM compositions with or without different potential eutectic components. The calorimeter was calibrated using substances with known enthalpy distributions.

To determine the heat storage capacity, the required temperature profile corresponding to the sample PCM composition was programmed into a standard climatic test cabinet inside of which a commercial 3-layer calorimeter measuring device (w&a Wärme und Anwendungstechnische Prüfungen) was positioned. SAT PCM compositions were cycled between 35°C and 65°C. A heating rate of 0.3 Kmin⁻¹ was applied to the samples, which were provided at 100 g each. This large quantity of the sample reduced the impact of weighing tolerance deviations and permitted the correct measurement for SAT PCMs which contain potential eutectic components.

### Repeated thermal cycling

To test the durability of the PCM compositions, the SAT-PCM were provided in Falcon tubes and placed in a water bath which was thermally cycled with a hydraulically connected thermostat. Temperature measurements were taken from a central portion of each SAT PCM sample in the Falcon tubes.

The samples were subjected to repeated heating and cooling of the surrounding water and the temperature of the PCM compositions was continuously measured throughout these cycles.

## Claims

1. A phase change material (PCM) composition comprising
- a PCM component,
- thermo-conductive filler particles, and
- expanded graphite.

2. The PCM composition of claim 1, wherein the expanded graphite material has a mean particle size of 10µm to 1500 µm, or of 20 µm to 1200 µm, or of 50 µm to 600 µm.

3. The PCM composition of claim 1 or 2, wherein the thermo-conductive filler particles are graphite flakes.

4. The PCM composition of any of claims 1 to 3, wherein the thermo-conductive filler particles have a mean size no larger than 700 µm, for example a mean size of 30 µm to 500 µm, or of 40 µm to 100 µm, or of 40 µm to 50 µm.

5. The PCM composition of any of claims 1 to 4, wherein the mean particle size of the thermo-conductive filler particles is no more than 2 times larger than the mean particle size of the expanded graphite.

6. The PCM composition of any of claims 1 to 5, wherein the expanded graphite is present at 5wt.% to 12wt.%, for example 6wt % to 9wt.%.

7. The PCM composition of any of claims 1 to 6, wherein the thermo-conductive filler particles are present at 5wt.% to 50wt.%, or at 10wt.% to 40wt.%, or at 15wt.% to 30wt.%.

8. The PCM composition of any of claims 1 to 7, wherein the PCM component is a salt-hydrate PCM component.

9. The PCM composition of claim 8, wherein the salt-hydrate PCM component is a sodium acetate trihydrate (SAT) PCM component or a sodium hydrogen phosphate (DSP) PCM.

10. The PCM composition of any of claims 1 to 9 further comprising a melting point depressing component, for example a eutectic solvent or a eutectic salt.

11. The PCM composition of any of claims 1 to 10 further comprising one or more suitable nucleation promoters, for example one or more nucleation promoters independently selected from disodium hydrogen phosphate (DSP) and hydrated forms thereof, tetrasodium pyrophosphate (TSPP) and hydrated forms thereof, titanium oxide (TiO2) and mixtures thereof.

12. The PCM composition of any of claims 1 to 11 being a hydrogel.

13. A process for preparing a PCM composition of claim 8 to 12, comprising
- dissolving anhydrous salt-hydrate PCM, for example sodium acetate anhydrous (SA), in an aqueous solvent,
- adding expanded graphite to the mixture and stir for a duration of time to enable formation of an expanded graphite network in the PCM composition,
- adding thermo-conductive filler particles, for example graphite flakes, to the mixture and stir for a duration of time to enable incorporation of the thermo-conductive filler particles in the expanded graphite network.

14. A device for heat storage or heat transfer comprising the PCM composition of any of claims 1 to 12 or a composition obtainable by the process of claim 13.

15. The device of claim 14 comprising a plurality of conduits for fluid or gaseous media passing through the PCM composition, said conduits being adapted for heat transfer between the fluid or gaseous media contained in or passing through the conduits, wherein the conduits are made of a material having a thermal conductivity value of less than 200 W/(m*K), less than 150 W/(m*K), less than 100 W/(m*K), or less than 70 W/(m*K), or less than 50 W/(m*K).
